(19) Europäisches Patentamt
European Patent Office
Office européen des brevets

(11) Veröffentlichungsnummer : **0 245 675 B1**

(12) # EUROPÄISCHE PATENTSCHRIFT

(45) Veröffentlichungstag der Patentschrift : **17.04.91 Patentblatt 91/16**

(51) Int. Cl.[5] : **C08L 77/00**, C08L 71/12

(21) Anmeldenummer : **87105946.5**

(22) Anmeldetag : **23.04.87**

(54) **Flammfeste Polyamide.**

(30) Priorität : **02.05.86 DE 3614899**

(43) Veröffentlichungstag der Anmeldung : **19.11.87 Patentblatt 87/47**

(45) Bekanntmachung des Hinweises auf die Patenterteilung : **17.04.91 Patentblatt 91/16**

(84) Benannte Vertragsstaaten : **CH DE FR GB IT LI NL**

(56) Entgegenhaltungen :
**EP-A- 0 164 767**
**DE-A- 3 000 221**
**FR-A- 2 169 363**
**US-A- 3 379 792**
**US-A- 3 383 435**
**ELIAS / VOHWINKEL, "Neue polymer Werkstoffe", Carl Hauser Verlag 1983, seiten 163-165**

(73) Patentinhaber : **BAYER AG**
**W-5090 Leverkusen 1 Bayerwerk (DE)**

(72) Erfinder : **Freitag, Dieter, Dr.**
**Hasenheide 10**
**W-4150 Krefeld 1 (DE)**
Erfinder : **Joswig, Thomas, Dr.**
**Scheiblerstrasse 81**
**W-4150 Krefeld 1 (DE)**
Erfinder : **Idel, Karsten, Dr.**
**Am Schwarzkamp 38**
**W-4150 Krefeld 1 (DE)**
Erfinder : **Füllmann, Heinz-Josef, Dr.**
**Am Schneeberg 31**
**W-5653 Leichlingen 2 (DE)**
Erfinder : **Müller, Friedemann, Dr.**
**Am Steinacker 5**
**W-4040 Neuss 21 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Jouve, 18, rue Saint-Denis, 75001 PARIS

**Beschreibung**

Gegenstand der Erfindung sind flammfeste Polyamidformmassen, die durch Zusatz von Polyphenylenoxiden flammfest ausgerüstet wurden und ein Verfahren zu ihrer Herstellung.

Es gibt verschiedene Möglichkeiten, Polyamide flammfest auszurüsten, so z.B. durch Zugabe von rotem Phosphor, insbesondere zu glasfaserverstärkten Polyamiden, durch Zugabe einer Kombination von anorganischen Metallverbindungen wie z.B. ZnO und organischen Halogenverbindungen wie z.B. halogenierten Diels-Alder-Addukten, oder durch Zugabe von Melamin oder Melaminderivaten.

Dabei gewinnen flammfest ausgerüstete, halogenfreie Polyamidformmassen, die auch eine helle Farbeinstellung möglich machen, insbesondere für den Elektrosektor immer mehr an Bedeutung.

Für diesen Bereich kommt daher nur ein Flammfestausrüstung mit Melamin oder Melaminderivaten in Frage. Nachteilig wirkt sich bei diesen flammfest eingestellten Polyamiden die Migration des Flammschutzmittels aus, die verstärkt in einer Atmosphäre mit hohem Feuchtigkeitsgehalt auftritt. Dies kann bei Elektrospritzgußteilen zur Verschmierung der Kontaktstellen führen. Außerdem wird keine Verbesserung des Sauerstoffindex bei dieser Flammfestausrüstung der Polyamide bewirkt.

Aus EP-A-0164767 sind Polymermassen aus Polyphenylenoxid, Polyamid und 0.1 bis 10 Gew.-% oxidierten Polyolefin wachsen bekannt.

DE-A-3000221 betrifft Polyamid zusammensetzungen, die etwa 5 bis etwa 35 Gew.-% eines bromierten Polyphenylenoxiden enthalten.

Es wurde nun überraschenderweise gefunden, daß Polyamidformmassen, die mit Polyphenylenoxiden (PPO) flammfest ausgerüstet werden, diese Nachteile nicht aufweisen.

Gegenstand der Erfindung sind daher flammfeste thermoplastische Polyamidformmassen, die 0,01-2 Gew.%, bezogen auf Polyamid, Polyphenylenoxide enthalten, wobei ein weiterer Zusatz von 0.01 bis 10 Gew.-% an oxidierten Polyolefin wachsen ausgeschlossen ist.

Als Polyphenylenoxide werden Polymere mit der wiederkehrenden Struktureinheit der allgemeinen Formel I eingesetzt :

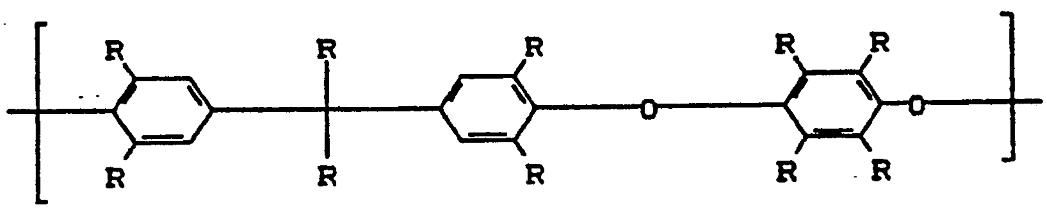

I

in denen

R gleich oder verschieden, für H, einen Alkylrest, vorzugsweise $C_1$-$C_4$ Alkylrest oder einen Arylrest, vorzugsweise $C_6$-$C_{14}$ Arylrest.

Die Polyphenylenoxide können vorzugsweise durch Polykondensation von Bisphenolen der allgemeinen Formel III und Monophenolen der allgemeinen Formel IV mit Hilfe von Sauerstoff in Gegenwart von Metallkatalysatoren hergestellt werden. Dabei wird das Molekulargewicht durch die Reaktionszeit kontrolliert. Verfahren zur Herstellung von PPO sind in den US-PS 33 06 874 und US-PS 33 06 875 beschrieben.

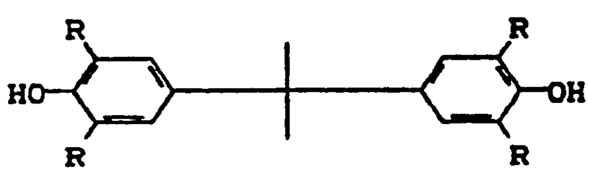

III

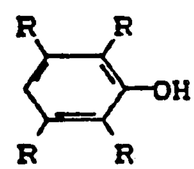

IV

In den allgemeinen Formeln III und IV haben die Reste R die oben angegebene Bedeutung.

Vorzugsweise werden die Polyphenylenoxide aus 2,6-Dimethylphenol als monofunktionelle Komponente und

2,2-Bis(4-hydroxyphenyl)-propan
2,2-Bis(3,5-dimethyl-4-hydroxyphenyl)-propan
Bis(4-hydroxyphenyl)methan
Bis(3,5-dimethyl-4-hydroxphenylmethan als bifunktionelle Komponente eingesetzt.

Die Polyphenylenoxide sollten ein Molekulargewicht $M_n$ von 500 bis 4000 aufweisen, das durch Endgruppenbestimmung der OH-Funktionen bestimmt wird.

Für die Herstellung der erfindungsgemäßen Formmassen werden Polyamide verwendet, die nach bekannten Polykondensationsverfahren ausgehend von Diaminen und Dicarbonsäuren und/oder Lactamen mit wenigstens 5 Ringgliedern oder entsprechende ω-Aminosäuren hergestellt werden. Als Ausgangsprodukte kommen aliphatische und aromatische Dicarbonsäuren wie Adipinsäure, 2,2,4- und 2,4,4-Trimethyladipinsäure, Azelainsäure, Sebazinsäure, Decandicarbonsäure, Dodecandicarbonsäure, Isophthalsäure, Terephthalsäure, aliphatische und aromatische Diamine wie Hexamethylendiamin, 2,2,4- und 2,4,4-Trimethylhexamethylendiamin, die isomeren Diamino-dicyclohexyl-methane, Diamino-dicyclohexyl-propane, Isophorondiamin, die isomeren Xylylendiaminen, Bis-aminomethyl-cyclohexan, Aminocarbonsäuren wie ε-Aminocapronsäure, ω-Aminoundecansäure, ω-Aminolaurinsäure bzw. die entsprechenden Lactame in Betracht. Auch Copolyamide aus mehreren der genannten Monomeren können eingesetzt werden.

Bevorzugte Polyamide sind Polyamid-6 und Polyamid 6,6.

Die Herstellung der erfindungsgemäßen Polyamidformmassen erfolgt vorzugsweise durch Mischen des PPO mit dem Polyamid in Ein- oder Doppelwellenextruder herkömmlicher Bauart bei üblichen Temperaturen. Man kann dazu die Komponenten vor der Extrusion mischen oder in das bereits geschmolzene Polyamid dosieren.

Die brandwidrig ausgerüsteten Polyamide können die üblichen Zusätze und Hilfsmittel enthalten, beispielsweise einen oder mehrere Füll- oder Verstärkungsstoffe, insbesondere Glasfasern in Mengen von 10-60 Gew.-%, bezogen auf die gesamte Mischung. Als weitere Füll- und Verstärkungsstoffe kommen Mikroglaskugeln, Kohlefasern, Kreide, Quarz wie beispielsweise Novaculit und Silikate wie Asbest, Feldspat, Glimmer, Talkum, Wollastonit sowie Kaolin in kalzinierter und nicht kalzinierter Form in Betracht. Außerdem sind Farbstoffe und Pigmente, insbesondere Farbruße und/oder Nigrosinbasen, Stabilisatoren, Verarbeitungshilfsmittel und staubbindende Mittel zu nennen, ferner Schlagzähmodifikatoren beispielsweise Copolymerisate des Ethylens, Poly(meth)-acrylaten oder gepfropfte Polybutadiene.

Als weitere Flammschutzmittel können solche üblicher Art, z.B. Melamine, Cyanursäuren, Barbitursäuren, Salze aus den genannten Verbindungen oder Reaktionsprodukte der Cyanur- oder Barbitursäure mitverwendet werden, wie sie beispielsweise in US-PS 3 980 618, US-PS 4 001 177, DE-AS 1 694 254 oder EP-A 44 424 genannt werden. Ferner seien Phosphorverbindungen, insbesondere Polyphosphonate entsprechend älteren, eigenen, unveröffentlichten Vorschlägen (DE-P 36 13 491 und DE-P 36 13 490) genannt. Diese zusätzlichen Flammschutzmittel werden in Mengen von 0,5 bis 15 Gew.-%, bevorzugt 1 bis 10 Gew.-% mitverwendet. Der Einsatz halogenhaltiger Flammschutzmittel oder von rotem Phosphor sind weniger bevorzugt.

Die erfindungsgemäßen, thermoplastischen Formmassen werden nach den bekannten Methoden durch Spritzguß oder Extrusion verarbeitet. Die flammfest ausgerüsteten Polyamid-Formkörper sind besonders für den Einsatz auf dem Elektro- und Automobilsektor geeignet und finden beispielsweise zur Herstellung von Gehäusen und Abdeckungen für technische Geräte wie Elektrohaushaltsgeräte, und für Automobilteile Verwendung.

Beispiele

In einem Doppelwellenextruder vom Typ ZSK 32 der Firma Werner und Pleiderer wird Polyamid 66 (relative Viskosität 3,0 ; gemessen bei 25°C an einer einprozentigen Lösung in m-Kresol) mit verschiedenen Polyphenylenoxiden bei einer Schmelzmasse-Temperatur von 274-280°C und einem Durchsatz von 10 kg/h gemischt. Die Mischung wird als Borste in einem Wasserbad abgekühlt. Nach dem Granulieren und Trocknen wird die Mischung zu Prüfkörpern verarbeitet.

In Tabelle 1 (Beispiele 1 bis 9) sind verschiedene Polyphenylenoxide im Vergleich gegenübergestellt. Tabelle 2 (Beispiele 10-14) befaßt sich mit der konzentrationsabhängigen Wirkung.

Als Maß für die Brandwirkung wurde der Sauestoffindex (OI) herangezogen (entsprechend ANSI/ASTM D 2863-77 ; Probenzündung mit Fremdflamme von unten).

**Tabelle 1**

Modifikation des PPO (2 Gew.-% in PA 66)

| Beispiel | Monomereinheiten des PPO Bisphenol | Monophenol | Mn | OI (% $O_2$) |
|---|---|---|---|---|
| 1* | HPP[2)] | DMP[3)] | 800 | 22,5 |
| 2* | DHPP[4)] | " | 800 | 22,5 |
| 3* | DHPP | " | 1600 | 23,0 |
| 4* | HPM[5)] | " | 800 | 22,5 |
| 5* | DHPM[6)] | " | 800 | 23,0 |
| 6 | - | " | 800 | 21,5 |
| 7 | - | " | 1600 | 21,5 |
| 8 | - | OPP[7)] | 1700 | 21,0 |
| 9 | - | - | - | 19,5 |

* erfindungsgemaß

**Tabelle 2**

PPO auf Basis: DHPP[4)]/DMP[3)]; Mn ~ 800)

| Beispiele | 10 | 11 | 12 | 13 | 14 |
|---|---|---|---|---|---|
| Gew.-% PPO | 0,1 | 0,5 | 1,0 | 2,0 | 4,0 |
| OI | 24,0 | 23,5 | 22,5 | 22,5 | 21,0 |

2) 2,2-Bis(4-hydroxyphenyl)propan
3) 2,6-Dimethylphenol
4) 2,2-Bis(3,5-dimethyl-4-hydroxyphenyl)propan
5) Bis(4-hydroxyphenyl)methan

6) Bis(3,5-dimethyl-4-hydroxyphenyl)methan
7) OPP = o-Phenylphenol

## Ansprüche

1. Flammfeste, thermoplastische Polyamidformmassen mit Polyphenylenoxiden als Flammschutzmitteln, dadurch gekennzeichnet, daß sie 0,01 bis 2 Gew.-%, bezogen auf Polyamid, phenylenoxide mit der wiederkehrenden Struktureinheit der allgemeinen Formel I

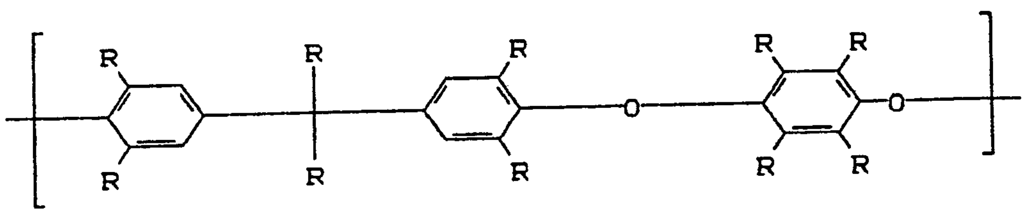

I

in der die Reste R, gleich oder verschieden, für H, einen –Alkyl– oder einen Arylrest stehen, wobei ein weiterer Zusatz von 0,01 bis 10 Gew.-% an oxidierten Polyolefinwachsen ausgeschlossen ist, enthalten.

2. Formmassen nach Anspruch 1, dadurch gekennzeichnet, daß die Polyphenylenoxide der Formel I aus 2,6-Dimethylphenol und aus einer der folgenden Verbindungen
2,2-Bis(4-hydroxyphenyl)propan
2,2-Bis(3,5-dimethyl-4-hydroxyphenyl)propan
Bis(4-hydroxyphenyl)methan
Bis(3,5-dimethyl-4-hydroxyphenyl)methan
aufgebaut sind.

3. Formmassen nach Ansprüchen 1 und 2, dadurch gekennzeichnet, daß als Polyamid Polyamid 6 oder Polyamid 66 eingesetzt wird.

4. Verfahren zur Herstellung flammfester Polyamidformmassen, gekennzeichnet durch ein Vermischen von 0,01 bis 2 Gew.-%, bezogen auf Polyamid, von Polyphenylenoxiden der allgemeinen Formel (I)

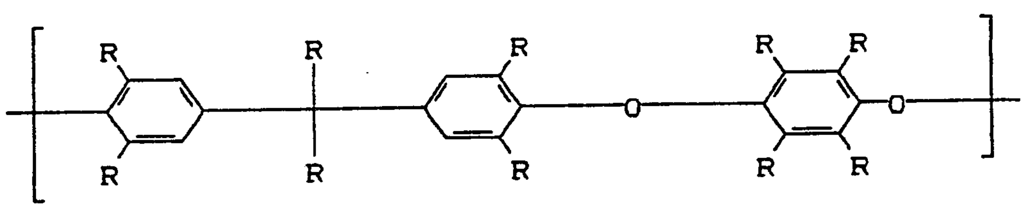

I

in denen die Reste R, gleich oder verschieden, für H, einen Alkyl- oder einen Arylrest stehen, mit thermoplastischen Polyamiden in der Schmelze, gegebenenfalls in Gegenwart weiterer, bekannter Flammschutzmittel, wobei der Zusatz von 0,01 bis 10 Gew,-% an oxidierten Polyolefinwachsen ausgeschlossen ist.

5. Verfahren zur Herstellung flammfester Polyamidformmassen nach Anspruch 4, gekennzeichnet durch Verwendung von Polyphenylenoxiden der Formel (I), in denen die Reste R gleich oder verschieden sind und einen $C_1$- bis $C_4$-Rest, einen $C_6$- bis $C_{14}$-Arylrest oder ein Wasserstoffatom darstellen, gegebenenfalls unter Zusatz von 0,5 bis 15 Gew.-% an an sich üblichen Flammschutzmitteln aus der Reihe Melamin, Cyanursäure, Barbitursäure oder ihren Salzen und/oder von Polyphosphonaten.

**Revendications**

1. Matières ignifugées thermoplastiques à mouler à base de polyamides contenant des polyphénylèneoxydes comme agents retardateurs de flamme, caractérisées en ce qu'elles contiennent 0,01 à 2% en poids, sur la base du polyamide, de polyphénylène-oxydes présentant le motif structural récurrent de formule générale I

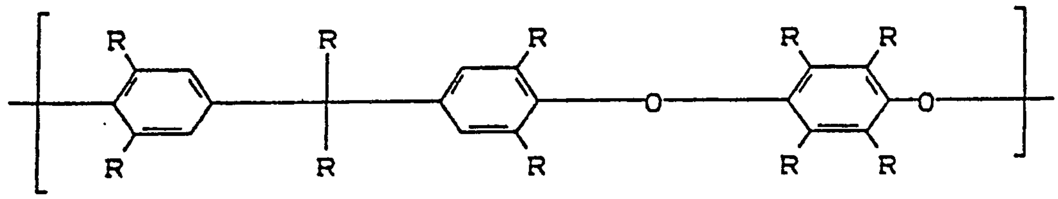

I

dans laquelle les restes R, identiques ou différents, représentent H, un reste alkyle ou un reste aryle, une autre addition de 0,01 à 10% en poids de cires polyoléfiniques oxydées étant exclue.

2. Matières à mouler suivant la revendication 1, caractérisées en ce que les polyphénylène-oxydes de formule I sont constitués de 2,6-diméthylphénol et de l'un des composés suivants :

2,2-bis(4-hydroxyphényl)propane
2,2-bis(3,5-diméthyl-4-hydroxyphényl)propane
Bis(4-hydroxyphényl)méthane
Bis(3,5-diméthyl-4-hydroxyphényl)méthane.

3. Matières à mouler suivant les revendications 1 et 2, caractérisées en ce qu'on utilise comme polyamide le polyamide 6 ou le polyamide 66.

4. Procédé de production de matières à mouler ignifugées à base de polyamides, caractérisé par le mélange de 0,01 à 2% en poids, sur la base du polyamide, de polyphénylène-oxydes de formule générale (I)

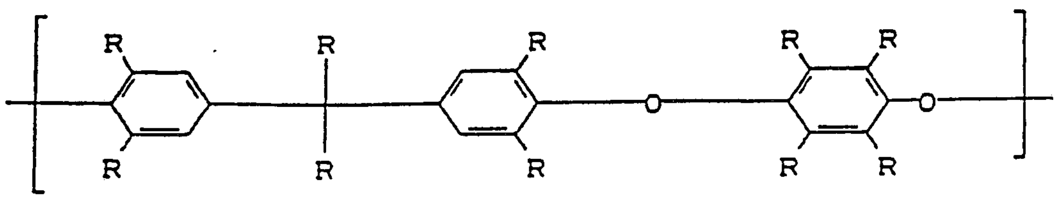

I

dans lesquels les restes R, identiques ou différents, représentent H, un reste alkyle ou un reste aryle, avec des polyamides thermoplastiques à l'état fondu, le cas échéant en présence d'autres retardateurs de flamme connus, l'addition de 0,01 à 10% en poids de cires polyoléfiniques oxydées étant exclue.

5. Procédé de production de matières à mouler ignifugées à base de polyamides suivant la revendication 4, caractérisé par l'utilisation de polyphénylène-oxydes de formule (I) dans lesquels les restes R sont identiques ou différents et représentent un reste en $C_1$ à $C_4$-alkyle, un reste aryle en $C_6$ à $C_{14}$ ou un atome d'hydrogène, le cas échéant avec addition de 0,5 à 15% en poids d'agents retardateurs de flamme classiques connus de la série mélamine, acide cyanurique, acide barbiturique ou leurs sels et/ou de polyphosphonates.

**Claims**

1. Flameproof thermoplastic polyamide moulding compounds containing polyphenylene oxides as flameproofing agents, characterized in that they contain 0.01 to 2% by weight, based on polyamide, polyphenylene oxides containing the recurring structural unit corresponding to general formula I

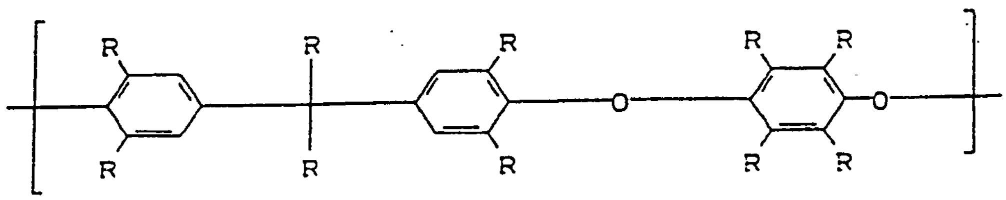

I

in which the substituents R may be the same or different and represent H, an alkyl or aryl radical, a further addition of 0.01 to 10% by weight oxidized polyolefin waxes being excluded.

2. Moulding compounds as claimed in claim 1, characterized in that the polyphenylene oxides of formula I are synthesized from 2,6-dimethyl phenol and from one of the following compounds :

2,2-bis-(4-hydroxyphenyl)-propane,
2,2-bis-(3,5-dimethyl-4-hydroxyphenyl)-propane,
bis-(4-hydroxyphenyl)-methane,
bis-(3,5-dimethyl-4-hydroxyphenyl)-methane.

3. Moulding compounds as claimed in claims 1 and 2, characterized in that polyamide-6 or polyamide-66 is used as the polyamide.

4. A process for the production of flameproof polyamide moulding compounds, characterized in that 0.01 to 2% by weight, based on polyamide, polyphenylene oxides containing the recurring structural unit corresponding to general formula I

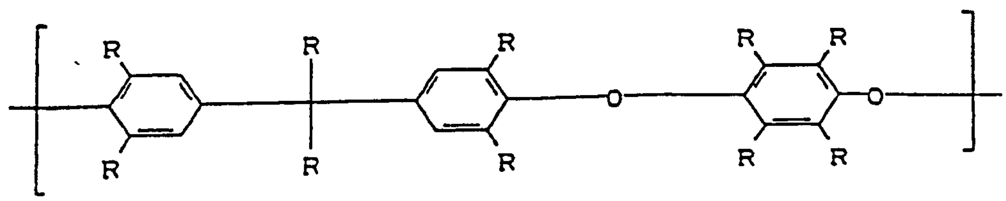

I

in which the substituents R may be the same or different and represent H, an alkyl or aryl radical, is mixed with thermoplastic polyamides in the melt, optionally in the presence of other known flameproofing agents, the addition of 0.01 to 10% by weight oxidized polyolefin waxes being excluded.

5. A process for the production of flameproof polyamide moulding compounds as claimed in claim 4, characterized by the use of polyphenylene oxides corresponding to formula (I), in which the substituents R may be the same or different and represent a $C_{1-4}$ alkyl radical, a $C_{6-14}$ aryl radical or a hydrogen atom, optionally with addition of 0.5 to 15% by weight typical flameproofing agents from the group consisting of melamine, cyanuric acid, barbituric acid or salts thereof and/or polyphosphonates.